# DEMANDE DE BREVET EUROPEEN

(11) **EP 4 002 572 A1**
(43) Date de publication de la demande: **25.05.2022**
(21) Numéro de dépôt: 21209582.2
(22) Date de dépôt: 22.11.2021
(51) Int. Cl.: H01M 50/342, H01M 50/358

(54) **ACCUMULATEUR MÉTAL-ION MUNI D'UN CONDUIT DE DÉGAZAGE, MODULE DE BATTERIE OU PACK-BATTERIE ASSOCIÉ À REFROIDISSEMENT LIQUIDE**

(30) Priorité: 23.11.2020 FR 2011982
(71) Demandeur: Commissariat à l'Energie Atomique et aux Energies Alternatives, 75015 Paris (FR)
(72) Inventeur: MEE, Fabrice, 38054 GRENOBLE CEDEX 09 (FR); DE PAOLI, Lionel, 38054 GRENOBLE CEDEX 09 (FR)
(74) Mandataire: Nony

(57) **Abrégé**

L'invention concerne une batterie ou Accumulateur électrochimique métal-ion, comprenant:
- un boitier (6) d'axe longitudinal (X),
- une zone de rupture (60) d'une partie du boitier, formant un évent de sécurité pour le dégazage de l'accumulateur,
- au moins un conduit (10) comprenant au moins une partie rigide (14) formant un raidisseur, fixé ou formé intégralement avec la partie du boitier, autour de l'évent de sécurité, et une partie souple (15) agencée de manière étanche avec le boitier ou avec le raidisseur lui-même étanche par rapport au boitier, dans le prolongement du raidisseur et autour de celui-ci, la partie souple étant adaptée pour se déformer élastiquement selon trois axes orthogonaux (X, Y, Z), de sorte à compenser des jeux selon ces axes lorsqu'elle est insérée et maintenue de manière étanche dans une ouverture débouchante (12) d'un carter (11) de module ou packbatterie.

## Description

### Domaine technique

La présente invention concerne le domaine des générateurs électrochimiques au métal-ion, en particulier au lithium-ion, qui fonctionnent selon le principe d'insertion ou de désinsertion, ou autrement dit intercalation-désintercalation, de ions métalliques dans au moins une électrode.

La présente invention vise principalement à améliorer la collecte, notamment en termes de sécurité, des flux de dégazage générés au cours de fonctionnement anormal/accidentel typiquement en cas d'emballement thermique, d'un accumulateur métal-ion, et ce plus particulièrement lorsque l'accumulateur est intégré dans un module ou un pack-batterie à environnement contraint, notamment du fait d'un refroidissement liquide.

Bien que décrite en référence à un accumulateur Lithium-ion, l'invention s'applique à tout accumulateur électrochimique métal-ion, c'est-à-dire également Sodium-ion, Magnésium-ion, Aluminium-ion...

L'invention s'applique aussi bien à des géométries d'accumulateur prismatiques que cylindriques, et de manière générale à toute géométrie possible d'accumulateur métal-ion.

### Technique antérieure

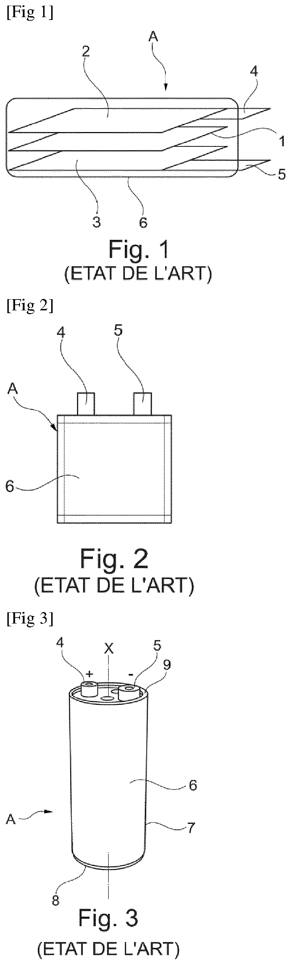

Telle qu'illustrée schématiquement en figures 1 et 2, une batterie ou accumulateur lithium-ion comporte usuellement au moins une cellule électrochimique C constituée d'un constituant d'électrolyte 1 entre une électrode positive ou cathode 2 et une électrode négative ou anode 3, un collecteur de courant 4 connecté à la cathode 2, un collecteur de courant 5 connecté à 1' anode 3 et enfin, un emballage 6 agencé pour contenir la cellule électrochimique avec étanchéité tout en étant traversé par une partie des collecteurs de courant 4, 5.

Plusieurs types de géométrie d'architecture d'accumulateur sont connus :
- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte 1 peut être de forme solide, liquide ou gel. Sous cette dernière forme, le constituant peut comprendre un séparateur en polymère, en céramique ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode 2 est constituée de matériaux d'insertion du cation Lithium qui sont en général composite, comme LiFePO₄, LiCoO₂, LiNi_{0.33}Mn_{0.33}Co_{0.33}O₂.

L'électrode négative ou anode 3 est très souvent constituée de carbone graphite ou en Li₄TiO₅O₁₂ (matériau titanate), éventuellement également à base de silicium ou de composite formé à base de silicium.

Le collecteur de courant 4 connecté à l'électrode positive est en général en aluminium.

Le collecteur de courant 5 connecté à l'électrode négative est en général en cuivre, en cuivre nickelé ou en aluminium.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement égal à 3,6 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages souples sont usuellement fabriqués à partir d'un matériau composite multicouches, constitué d'un empilement de couches d'aluminium recouvertes par un ou plusieurs film(s) en polymère laminés par collage.

Les emballages rigides sont quant à eux utilisés lorsque les applications visées sont contraignantes où l'on cherche une longue durée de vie, avec par exemple des pressions à supporter bien supérieures et un niveau d'étanchéité requis plus strict, typiquement inférieure à 10⁻⁸ mbar.l/s, ou dans des milieux à fortes contraintes comme le domaine aéronautique ou spatial.

Aussi, à ce jour, un emballage rigide utilisé est constitué d'un boitier métallique, généralement en métal, typiquement en acier inoxydable (inox 316L ou inox 304) ou en aluminium (Al 1050 ou Al 3003), ou encore en titane. En outre, l'aluminium est généralement préféré pour son coefficient de conductivité thermique élevé comme expliqué ci-après.

La géométrie de la plupart des boitiers rigides d'emballages d'accumulateurs Li-ion est cylindrique, car la plupart des cellules électrochimiques des accumulateurs sont enroulées par bobinage selon une géométrie cylindrique autour d'un mandrin cylindrique. Des formes prismatiques de boitiers ont également déjà été réalisées par bobinage autour d'un mandrin prismatique.

Un des types de boitier rigide de forme cylindrique, usuellement fabriqué pour un accumulateur Li-ion de forte capacité, est illustré en figure 3.

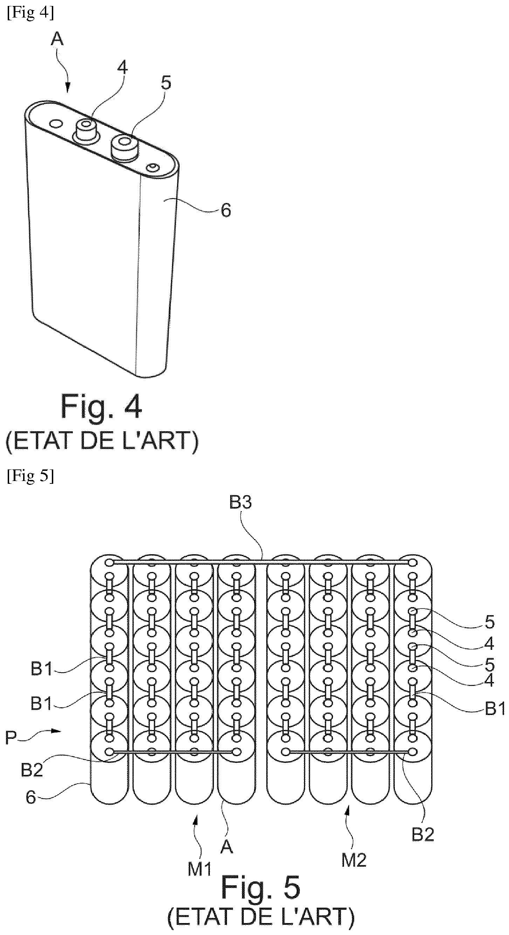

Un boitier rigide de forme prismatique est également montré en figure 4.

Le boitier 6 comporte une enveloppe latérale cylindrique 7, un fond 8 à une extrémité, un couvercle 9 à l'autre extrémité, le fond 8 et le couvercle 9 étant assemblés à l'enveloppe 7. Le couvercle 9 supporte les pôles ou bornes de sortie du courant 4, 5. Une des bornes de sortie (pôles), par exemple la borne positive 4 est soudée sur le couvercle 9 tandis que l'autre borne de sortie, par exemple la borne négative 5, passe à travers le couvercle 9 avec interposition d'un joint non représenté qui isole électriquement la borne négative 5 du couvercle.

Le type de boitier rigide largement fabriqué consiste également en un godet embouti et un couvercle soudés entre eux sur leur périphérie par laser. En revanche, les collecteurs de courant comprennent une traversée avec une partie faisant saillie sur le dessus du boitier et qui forme une borne aussi appelée pôle apparent de la batterie.

Un problème connu dans les accumulateurs Li-ion est celui de la génération de gaz parfois lors d'étape de formation électrique et au cours du fonctionnement des accumulateurs.

Ainsi, il existe déjà différents dispositifs de libération des gaz générés, en particulier lors d'un fonctionnent anormal, à l'intérieur des accumulateurs électrochimiques, en cas de surpression, dispositifs aussi appelés dispositifs de dégazage.

Un dispositif, bien répandu en particulier pour les accumulateurs Li-ion de format cylindrique, notamment au format 18650, consiste à un affaiblissement par ligne de prédécoupe aussi appelée ligne de rupture d'une partie du boitier, plus particulièrement du couvercle. Cette ligne de rupture forme en général un disque qui est dimensionnée pour se percer au-delà d'une pression prédéterminée, ce qui permet de laisser échapper les gaz vers l'extérieur de l'accumulateur. Un tel dispositif à disque de rupture, forme un évent de sécurité (« venting » en anglais), permettant de faire chuter la pression interne jusqu'à l'atteinte d'un équilibre de pression avec la pression du milieu ambiant.

Un pack batterie P est constitué d'un nombre variable d'accumulateurs pouvant atteindre plusieurs milliers qui sont reliés électriquement en série ou en parallèle entre eux et généralement par des barres de connexion, appelées usuellement, busbars.

Un exemple de pack-batterie P est montré en figure 5. Ce pack est constitué de deux modules M1, M2 d'accumulateurs Li-ion A identiques et reliés entre eux en série, chaque module M1, M2 étant constitué de quatre rangées d'accumulateurs reliés en parallèle, chaque rangée étant constituée d'un nombre égal à six accumulateurs Li-ion.

Comme représenté, la connexion mécanique et électrique entre deux accumulateurs Li-ion d'une même rangée est réalisée par vissage de busbars B1, avantageusement en cuivre, reliant chacune une borne positive 4 à une borne négative 5. La connexion entre deux rangées d'accumulateurs en parallèle au sein d'un même module M1 ou M2 est assurée par un busbar B2, également avantageusement en cuivre. La connexion entre les deux modules M1, M2 est assurée par un busbar B3, également avantageusement en cuivre.

Dans le développement et la fabrication des batteries lithium-ion, pour chaque profil de charge/décharge spécifique à chaque nouvelle demande, quels que soient les acteurs du marché, cela nécessite des dimensionnements précis (architecteurs électriques série/parallèle, mécaniques, thermiques...) pour concevoir de manière optimale un pack batterie performant et sécuritaire.

Un système électrochimique lithium, que ce soit à l'échelle cellule, module ou pack, produit des réactions exothermiques quel que soit le profil de cyclage donné. Ainsi, à l'échelle d'un accumulateur unitaire, en fonction des chimies considérées, le fonctionnement optimal des accumulateurs lithium ion est limité dans une certaine gamme de température.

Un accumulateur doit contrôler sa température, typiquement généralement inférieure à 70°C à sa surface extérieure de boitier, afin d'éviter de partir en emballement thermique qui peut être suivi d'une génération de gaz et d'explosion et/ou feu.

Également, le maintien d'une température inférieure à 70°C permet d'augmenter sa durée de vie, car plus la température de fonctionnement d'un accumulateur est élevée, plus sa durée de vie sera diminuée.

En outre, certaines chimies d'accumulateurs requièrent une température de fonctionnement bien au-delà de la température ambiante et par conséquent, il s'avère nécessaire de réguler leur niveau de température par un préchauffage initial des accumulateurs, voire par un maintien en température permanent des accumulateurs.

Dans une batterie, ou pack-batterie à plusieurs accumulateurs Li-ion, la mise en série ou parallèle d'accumulateurs plus ou moins différents peut avoir des conséquences sur les performances et durabilité résultantes pour le pack.

Il est ainsi reconnu que dans un pack-batterie, par exemple de véhicule électrique, les dispersions de vieillissements peuvent être élevées en fonction par exemple de la position des accumulateurs, suite à des dissymétries de vieillissement entre les accumulateurs ou des différences d'utilisations (variations thermiques entre le cœur et les bords du pack, gradient de courant...). Ainsi, des écarts d'états de santé SOH de l'ordre de 20% entre accumulateurs d'un même pack peuvent être observés.

Aussi, afin de limiter le vieillissement prématuré du pack, il est nécessaire d'optimiser la température de fonctionnement et la dispersion de température d'un accumulateur à l'autre. Un accumulateur (ou des accumulateurs) qui vieillit (vieillissent) plus vite que les autres peut (peuvent) avoir un impact direct sur les performances électriques du pack-batterie complet.

A l'échelle du module et du pack, typiquement en dessous de 0°C par exemple, il peut être nécessaire d'avoir recours à un pilotage particulier via un BMS, afin de limiter la puissance demandée au pack et d'éviter une dégradation des accumulateurs.

On rappelle ici que le BMS (acronyme anglais de « *Battery Management System* ») est utilisé afin de suivre l'état des différents accumulateurs (état de charge, état de santé...) et de piloter les différents éléments de sécurité , tels des courants ne devant pas être trop élevés, des potentiels non adaptés (trop élevés ou trop faibles), des températures limites et a donc notamment pour fonction d'arrêter les applications de courant dès l'atteinte de valeurs de tension seuil, i.e. une différence de potentiels entre les deux matériaux d'insertion actifs. Le BMS stoppe donc les applications de courant (charge, décharge) dès l'atteinte de tensions seuils.

Au-delà d'une température supérieure, typiquement de l'ordre 70°C, il convient également d'être vigilant car des réactions électrochimiques peuvent conduire à la destruction des accumulateurs unitaires et provoquer une propagation d'un défaut interne à l'accumulateur, typiquement un court-circuit interne, qui peut conduire à l'extrême à l'explosion du pack. Dans ce cas, il est également nécessaire d'avoir recours au BMS, afin de protéger les accumulateurs.

Par conséquent, un pack-batterie nécessite généralement un BMS très performant, afin de générer des équilibrages de tension.

A contrario, on comprend bien qu'un pack-batterie thermiquement équilibré est aussi une nécessité.

La difficulté intervient pour assurer l'uniformité de la température au sein d'un pack-batterie. Une solution connue pour tenter d'assurer une homogénéité de température au sein d'un pack-batterie consiste à faire circuler un fluide caloporteur (gazeux ou liquide) au sein d'un pack-batterie.

Un liquide de refroidissement peut être utilisé à la place de l'air. Mais, les notions de coût, d'encombrement et de masse supplémentaire peuvent être des facteurs prépondérants en fonction de l'application considérée.

Par exemple, un refroidissement par air est la solution la moins onéreuse puisque comme indiqué, elle consiste en une ventilation d'air forcée entre les accumulateurs. En revanche, les performances thermiques d'un refroidissement par air sont de faible qualité du fait du coefficient d'échange peu élevé et de sa faible inertie thermique. Ainsi, dans ce type de refroidissement, le premier accumulateur va s'échauffer malgré tout au contact de l'air et la température d'air va augmenter. Au passage du deuxième accumulateur, l'air est plus chaud et l'accumulateur est plus chaud que le premier. Au final, on obtient donc des accumulateurs dont la température est inhomogène.

Les solutions par refroidissement liquide sont nettement plus efficaces.

La maitrise des flux aléatoires de dégazage issus des accumulateurs, comme évoqué ci-avant, en particulier dans un contexte accidentel d'emballement thermique, pose des problèmes de sécurité au sein de tous les pack-batteries. Le volume global de ces flux de dégazage peut s'élever à plusieurs dizaines de litres.

Cela est d'autant plus vrai lorsqu'un système de refroidissement liquide est mis en œuvre. En effet, il s'agit de gérer à la fois des circuits de gaz et un circuit de liquide.

La demande de brevet DE102011087198 A1 divulgue un pack-batterie avec un système de collecte de gaz commun à plusieurs modules de batterie intégrant chacun plusieurs accumulateurs, le circuit commun de collecte comprenant une unique zone de stockage des gaz dans laquelle une matière absorbante de type charbons actifs est agencée. Le système divulgué ne permet pas d'empêcher la propagation d'un défaut générant des gaz aux accumulateurs voisins.

La demande de brevet DE102013201365 A1 divulgue également un pack-batterie avec un système de collecte de gaz commun dans lequel chaque accumulateur est cloisonné provisoirement par des parois formant des volets aptes à s'ouvrir sous la pression afin de canaliser les gaz dans un seul et même collecteur, puis de les évacuer vers l'extérieur par des évents débouchant dans le collecteur.

La demande de brevet JP2010215019 divulgue un module de batterie à pluralité d'accumulateurs 1 de géométrie prismatique comprenant une pièce de maintien dans laquelle sont agencés et maintenus les accumulateurs parallèles les uns aux autres. Une enveloppe élastique en caoutchouc est agencée autour de chaque évent d'accumulateur, entre un conduit de décharge des gaz susceptibles d'être évacués des accumulateurs, et la face supérieure du boitier des accumulateurs. Un insert métallique noyé dans l'enveloppe élastique permet de presser cette dernière contre les faces des accumulateurs. Dans la configuration divulguée dans cette demande de brevet, les gaz évacués d'un accumulateur donnée vient nécessairement au contact des autres accumulateurs et de leurs évents et l'ensemble des échappements de gaz des accumulateurs est mutualisé dans un espace commun confiné.

Aucun des systèmes selon les demandes de brevet précitées ne propose une solution individuelle, c'est-à-dire accumulateur par accumulateur, au problème de dégazage. Ils ne prennent donc pas en compte les compensations mécaniques nécessaires au bon vieillissement d'un accumulateur pendant son cycle de vie (charges et décharges), qui entraine le gonflement de l'accumulateur et impose de fortes contraintes d'intégration.

De plus, les systèmes proposés ne sont pas exploitables dans le contexte d'un module ou pack-batterie qui doit être compact (faible rapport volume / densité énergétique) et/ou lorsqu'est mis en œuvre un système de refroidissement actif, avec le liquide de refroidissement en contact direct avec les accumulateurs.

Il existe donc un besoin pour améliorer encore les solutions de collecte des flux de dégazage d'un accumulateur métal-ion, intégré au sein d'un module ou un pack-batterie, notamment lorsqu'un refroidissement liquide est mis en œuvre.

Le but général de l'invention est alors de répondre au moins en partie à ce besoin.

### Exposé de l'invention

Pour ce faire, l'invention a tout d'abord pour objet une batterie ou accumulateur électrochimique métal-ion, comprenant :
- un boitier d'axe longitudinal (X),
- une zone de rupture d'une partie du boitier, formant un évent de sécurité pour le dégazage de l'accumulateur,
- au moins un conduit comprenant au moins une partie rigide formant un raidisseur, fixé de manière étanche ou formé intégralement avec la partie du boitier, autour de l'évent de sécurité, et une partie souple agencée de manière étanche avec le boitier ou avec le raidisseur lui-même étanche par rapport au boitier, dans le prolongement du raidisseur et autour de celui-ci, la partie souple étant adaptée pour se déformer élastiquement selon trois axes orthogonaux (X, Y, Z), de sorte à compenser des jeux selon ces axes lorsqu'elle est insérée et maintenue de manière étanche dans une ouverture débouchante d'un carter de module ou pack-batterie.

Ainsi, l'invention concerne essentiellement à munir chaque accumulateur métal-ion de géométrie prismatique, destiné à être intégré au sein d'un module ou pack-batterie, d'un conduit dans la continuité de l'évent de sécurité, afin d'évacuer de façon sécurisée les flux de dégazage dudit accumulateur à l'extérieur du module ou du pack-batterie.

La solution selon l'invention est d'autant plus avantageuse lorsque le module ou pack-batterie est en environnement contraint, en particulier lorsqu'est mis en œuvre un refroidissement liquide.

Le conduit comprend deux parties dont un raidisseur directement autour de l'évent de sécurité et une partie souple dans le prolongement du raidisseur.

Le raidisseur permet d'une part de garantir une section de passage des gaz en sortie d'évent toujours à valeur constante correspondant à la section définie par la zone de rupture, qui peut être une simple ligne de rupture, de l'évent qui est lui intégré à la base du soufflet et d'autre part d'assurer l'intégrité de la partie souple sous les contraintes éventuelles extérieures à l'accumulateur, de type mises sous pression ou écrasements, par exemple générées par le refroidissement par immersion complète dans le liquide caloporteur.

Le matériau du raidisseur peut être choisi compatible avec la nature, température, pression des gaz susceptibles d'être évacués par l'évent de sécurité.

La partie souple du conduit est capable de compenser des jeux sur 3 axes (X, Y et Z). Il peut s'agir des jeux mécaniques résultants des cycles de charges et décharges des accumulateurs qui génèrent des gonflements de ceux-ci : les compensations sont alors dynamiques. Il peut aussi s'agir des jeux d'assemblages : les compensations sont dans ce cas statiques. De manière générale, les jeux peuvent être ceux liés à l'assemblage de chaque accumulateur au carter d'un module ou de pack-batterie, ou des déplacements mineurs des accumulateurs liés à leurs variations géométriques au cours de leur durée de vie, telles que des variations de volumes en cyclage.

La partie souple est plutôt au contact/compatible avec l'environnement dans le carter du module ou du pack-batterie, par exemple le liquide de refroidissement.

L'intégration d'un conduit mixte (raidisseur/partie souple) dans chaque accumulateur au sein d'un module ou pack-batterie permet de compenser les différents jeux entre les accumulateurs tout au long de leurs cycles de vie, sans créer de contraintes mécaniques supplémentaires.

Un conduit selon l'invention peut être envisageable avec n'importe quelle forme correspondante à celle d'un évent de sécurité, notamment à section cylindrique ou elliptique. De même, la géométrie d'accumulateurs pour laquelle l'invention peut être mise en œuvre, peut être prismatique, cylindrique ou selon toute autre forme, à la condition qu'elle présente un évent de dégazage qui puisse être séparé du fluide de refroidissement grâce à un conduit conforme à l'invention, et ce sans gêner les connectiques de l'accumulateur ou autres composants environnants.

En ce qui concerne le montage et la fixation du conduit selon l'invention, on peut envisager par exemple un procédé de collage du raidisseur et le cas échéant de la partie souple au boitier d'accumulateur et diverses solutions possibles pour la partie souple au carter de module ou pack-batterie, par exemple un procédé de bouchonnage, placage... ou autres.

A ce jour, l'intégration d'accumulateurs métal-ion dans un module ou pack-batterie est problématique.

En effet, un accumulateur donné est un composant mécanique susceptible d'avoir de fortes variations dimensionnelles liées d'une part aux procédés de fabrication et d'autre part à son cycle de vie. Ces fortes variations la rendent difficilement intégrable à une chaine de côtes fonctionnelle.

Si l'on rajoute à ceci tous les jeux d'assemblage, il devient alors très difficile de garantir de façon précise le positionnement de l'ensemble des évents de sécurité des accumulateurs au sein d'un système global que constitue un module ou un pack-batterie.

L'invention permet de s'affranchir des fortes variations et des jeux d'assemblage. Pour ce faire, l'invention sécurise individuellement le dégazage de chaque accumulateur avec un conduit étanche en sortie d'évent de sécurité, capable de supporter des jeux mécaniques sur plusieurs millimètres selon chaque axe, tout en gardant son intégrité.

Dans le cadre de l'invention, la projection des gaz issus du conduit, dans un espace en-dehors du carter de module ou pack-batterie est une projection dans un espace/volume préférentiellement significatif par rapport à l'espace à l'intérieur du carter. Autrement dit, un flux de gaz évacué d'un accumulateur donné est typiquement mis au contact avec l'atmosphère hors du module ou pack-batterie, avec donc un effet fort de dilution et de non-confinement et donc de refroidissement du flux par ces deux effets. Autrement dit encore, il n'y a pas de confinement du flux chaud/pollué/en pression, au contact des autres accumulateurs ni même des évents des autres accumulateurs, comme dans l'état de l'art, notamment dans la demande de brevet JP2010215019.

Comme déjà indiqué, dans un module de batterie ou pack-batterie, chaque accumulateur a individuellement un conduit/tube qui permet cette évacuation hors du carter du module ou pack, sans mutualisation dans un espace commun confiné. Cela est avantageux car un espace confiné peut induire un risque de rétroaction négative des gaz libérés sur les autres accumulateurs du module ou pack. La sécurité du carter de module ou pack-batterie est donc assurée au niveau de chaque accumulateur, et non mutualisée au niveau d'un conduit commun comme dans l'état de l'art, notamment dans JP2010215019. La sécurité est donc augmentée en cas d'emballement thermique.

Au final, les avantages de la solution selon l'invention par rapport aux solutions selon l'état de l'art citées en préambule sont nombreux parmi lesquels on peut citer:
- un traitement individuel des potentiels dégazages des accumulateurs, ce qui améliore la sécurité d'un module ou pack-batterie ;
- l'absence de contraintes mécaniques d'un module ou pack-batterie qui seraient liées aux flux de dégazage potentiels des accumulateurs;
- une compensation et une souplesse non-négligeable des jeux d'assemblage d'un module ou pack-batterie.

Selon un premier mode de réalisation avantageux, le raidisseur est une pièce directement fixée sur la partie du boitier, la partie souple étant également une pièce directement fixée sur la partie du boitier et distincte du raidisseur.

Selon ce premier mode, la portion supérieure du raidisseur comprend au moins deux ergots diamétralement opposés dans une direction radiale du conduit et faisant saillie vers l'extérieur de ce dernier.

Plusieurs modes de fabrication en surmoulage peuvent être envisagés pour simplifier le montage et l'intégration du conduit sur un accumulateur. Une fabrication avec surmoulage peut permettre également un abaissement des coûts sur de gros volumes de production. Ainsi, selon un premier mode de réalisation avantageux, le raidisseur et la partie souple constituent une seule pièce monobloc.

Selon une variante du premier mode, le raidisseur est une pièce directement fixée sur la partie du boitier, la partie souple étant surmoulée sur le raidisseur.

Selon une autre variante du premier mode, la partie souple est une pièce directement fixée sur la partie du boitier, le raidisseur comprenant au moins un anneau surmoulé à l'intérieur de la partie souple.

Selon un deuxième mode de réalisation avantageux, le raidisseur est une pièce distincte d'une pièce formant la partie souple.

Selon une première variante de réalisation de ce deuxième mode, la pièce formant le raidisseur est une pièce directement fixée sur la partie du boitier, la pièce formant la partie souple étant également directement fixée sur la partie du boitier.

Selon une première variante de réalisation de ce deuxième mode, le raidisseur est une pièce directement fixée sur la partie du boitier, la partie souple étant un anneau élastique emmanché à force sur le raidisseur. L'anneau emmanché peut être de type silentbloc existant qui réalise la fonction de compensateur de jeux. Le dégazage d'un accumulateur créant une forte élévation de température, ce mode a pour avantages d'offrir un plus grand choix dans les matières et les procédés de fabrication du conduit. De plus, l'assemblage et le collage de celui-ci sur le boitier d'accumulateur seraient facilités, de par sa tenue mécanique.

Selon une caractéristique avantageuse, la portion supérieure du raidisseur comprend au moins deux ergots diamétralement opposés dans une direction radiale du conduit et faisant saillie vers l'extérieur de ce dernier.Selon une variante de réalisation avantageuse, la partie souple est un soufflet comprenant:
- une portion de fixation formant une base,
- une portion centrale dans le prolongement de la base, comprenant au moins un pli adapté pour se déformer élastiquement selon les trois axes orthogonaux (X, Y, Z),
- une portion de blocage dans le prolongement de la portion centrale, la portion de blocage étant adaptée pour s'insérer et être maintenue dans l'ouverture débouchante.

Avantageusement, le raidisseur est en un plastique haute température, choisi parmi le polyétheréthercétone (PEEK) ou le polyétherimide (PEI), ou en aluminium, ou en céramique.

Avantageusement encore, la partie souple est en élastomère choisi parmi un caoutchouc, un nitrile ou un silicone.

Selon une variante de réalisation avantageuse, la partie souple comprend, à son extrémité libre, un embout conique prédécoupé, adapté pour réaliser le centrage et la mise en position de la partie souple dans l'ouverture débouchante.

L'invention a également pour objet un module ou pack-batterie, comprenant:
- une pluralité de batteries ou accumulateurs électrochimiques métal-ion tels que ceux décrits précédemment,
- un circuit de fluide caloporteur pour refroidir ou réchauffer les accumulateurs, comprenant un réservoir de fluide caloporteur dans lequel les accumulateurs sont immergés, le réservoir comprenant un carter percé d'une pluralité d'ouvertures débouchantes dans chacune desquelles la partie souple d'un conduit d'accumulateur est insérée et maintenue de manière étanche.

Le module ou pack-batterie comprend avantageusement, en tant qu'organe de maintien étanche de la partie souple du conduit de chaque accumulateur, une bride de fixation emmanchée à force dans la partie souple insérée dans une ouverture débouchante.

Selon un mode de réalisation avantageux, le module ou pack-batterie est configuré de sorte que chaque conduit d'accumulateur puisse évacuer les gaz susceptibles d'être libérés par son évent, dans un espace en dehors du carter du module ou pack-batterie, notamment à l'atmosphère. On précise ici que le carter est l'enveloppe générale du module ou pack-batterie dans laquelle l'ensemble des accumulateurs est fixé et maintenu.

D'autres avantages et caractéristiques ressortiront mieux à la lecture de la description détaillée, faite à titre illustratif et non limitatif, en référence aux figures suivantes.

### Brève description des dessins

[Fig 1] la figure 1 est une vue schématique en perspective éclatée montrant les différents éléments d'un accumulateur lithium-ion.
[Fig 2] la figure 2 est une vue de face montrant un accumulateur lithium-ion avec son emballage souple selon l'état de l'art.
[Fig 3] la figure 3 est une vue en perspective d'un accumulateur lithium-ion selon l'état de l'art avec son emballage rigide constitué d'un boitier de forme cylindrique.
[Fig 4] la figure 4 est une vue en en perspective d'un accumulateur lithium-ion selon l'état de l'art avec son emballage rigide constitué d'un boitier de forme prismatique.
[Fig 5] la figure 5 est une vue en perspective d'un assemblage au moyen de busbars d'accumulateurs lithium-ion de géométrie cylindrique selon l'état de l'art, formant un pack-batterie.
[Fig 6] la figure 6 est une vue en perspective d'un exemple de montage d'accumulateur lithium-ion de géométrie prismatique selon l'invention dans un carter de pack-batterie.
[Fig 7] la figure 7 est une vue en coupe longitudinale partielle de la figure 6, montrant en détail l'accumulateur muni de son conduit selon l'invention.
[Fig 8] la figure 8 est une vue de dessus d'un d'accumulateur lithium-ion de géométrie prismatique selon l'invention, montrant l'évent de sécurité.
[Fig 9] la figure 9 est une vue en perspective d'un premier mode de réalisation d'un conduit tel que fixé à un accumulateur selon l'invention.
[Fig 10] la figure 10 est une vue en perspective de la partie souple du conduit selon la figure 9.
[Fig 11] la figure 11 est une vue en perspective de la partie rigide du conduit selon la figure 9.
[Fig 12] la figure 12 est une vue en perspective d'un deuxième mode de réalisation d'un conduit conforme à l'invention.
[Fig 13] la figure 13 est une vue en perspective d'un troisième mode de réalisation d'un conduit conforme à l'invention.
[Fig 14] la figure 14 est une vue en perspective d'un quatrième mode de réalisation d'un conduit conforme à l'invention.
[Fig 15] la figure 15 reprend la figure 9 en montrant par transparence la partie rigide entourée de la partie souple du conduit conforme à l'invention.
[Fig 16] la figure 16 est une vue en perspective d'une variante du conduit selon la figure 15.
[Fig 17] la figure 17 est une vue en perspective d'une variante de la partie souple d'un conduit selon l'invention, selon laquelle un embout conique prédécoupé est agencé.
[Fig 18] la figure 18 est une vue en perspective d'un pack-batterie avec la mise en place dans le carter pour chacun des accumulateurs au moyen d'un embout conique selon la figure 17.

### Description détaillée

Les figures 1 à 5 sont relatives à des exemples différents d'accumulateur Li-ion, d'emballages souples et boitiers d'accumulateurs ainsi qu'un pack-batterie selon l'état de l'art. Ces figures 1 à 5 ont déjà été commentées en préambule et ne le sont donc pas plus ci-après.

Par souci de clarté, les mêmes références désignant les mêmes éléments selon l'état de l'art et selon l'invention sont utilisées pour toutes les figures 1 à 18.

Dans l'ensemble de la présente demande, les termes « bas », « haut », «dessous », « dessus», « inférieur» et «supérieur» sont à comprendre par référence par rapport à l'agencement d'un accumulateur métal-ion selon l'invention à la verticale dans un pack-batterie.

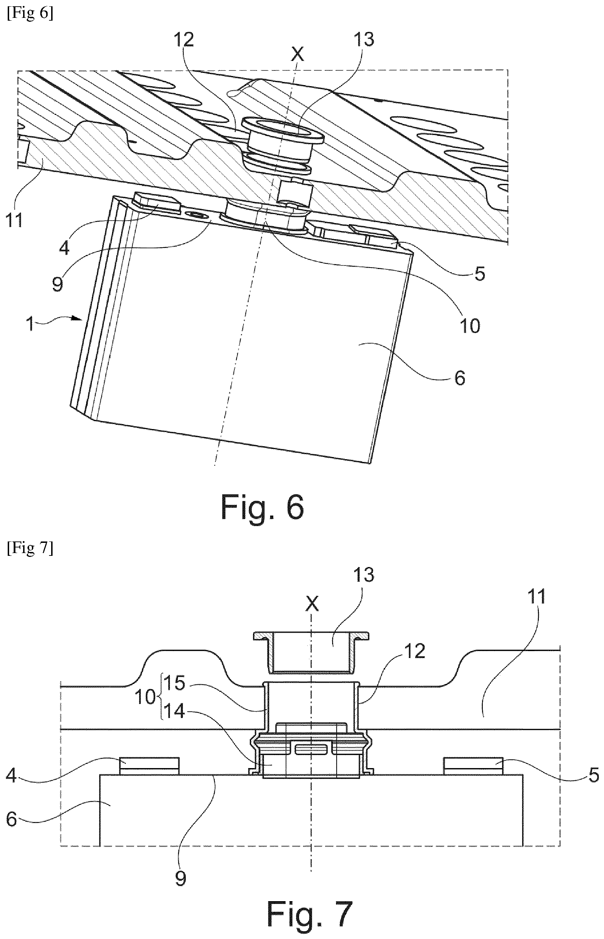

On a illustré en figures 6 et 7, un accumulateur Li-ion de géométrie prismatique d'axe longitudinal X avec un conduit 10 selon l'invention, et tel qu'il est inséré dans un carter 11 de pack-batterie.

Le carter 11 est celui d'un réservoir de liquide caloporteur dans lequel les accumulateurs Li-ion selon l'invention sont au moins partiellement immergés.

Comme illustré, le conduit 10 est inséré dans une ouverture débouchante 12 et est maintenu avec l'accumulateur dans celle-ci au moyen d'une bride de fixation 13 selon un procédé de bouchonnage.

Plus précisément, le conduit 10 comprend une partie rigide formant un raidisseur 14, fixé de manière étanche sur le couvercle 9 du boitier 6 d'accumulateur, autour de l'évent de sécurité 60. La section du raidisseur 14 correspond à celle de l'évent 60, ce qui permet de respecter et sécuriser la section de passage des flux de gaz définie par le fabricant de l'accumulateur. Le raidisseur 14 peut être en plastique technique haute température de type PEEK ou PEI. Il peut être collé directement sur le couvercle 9 de boitier autour de l'évent de sécurité 60.

Le conduit 10 comprend également une partie souple 15 agencée de manière étanche dans le prolongement du raidisseur 14 et autour de celui-ci.

Tel qu'illustré en figures 6 et 7, une extrémité de la partie souple 15 est fixée directement sur le couvercle 9 du boitier 6 et/ou sur le raidisseur 14, tandis que l'autre extrémité est insérée dans l'ouverture débouchante 12 et maintenue dans celle-ci par la bride de fixation 13 qui y est emmanchée à force à l'intérieur.

L'intégrité de la partie souple 15 soumise aux contraintes mécaniques de types pressions ou écrasements, notamment par le liquide caloporteur au sein du réservoir, est assurée par le raidisseur 14.

La partie souple 15 peut être en élastomère, tel qu'un caoutchouc, un nitrile, un silicone.

Selon l'invention, la partie souple 15 est adaptée pour se déformer élastiquement selon trois axes orthogonaux (X, Y, Z), de sorte à compenser des jeux selon ces axes. Les jeux peuvent être ceux liés à l'assemblage de chaque accumulateur au carter d'un module ou de pack-batterie, ou des déplacements mineurs des accumulateurs liés à leurs variations géométriques au cours de leur durée de vie, telles que des variations de volumes en cyclage.

A titre d'exemple, on peut dimensionner la partie souple 15 avec une déformation possible de +/- 1,5mm selon les axes X-Y et 0 à 2mm selon l'axe Z.

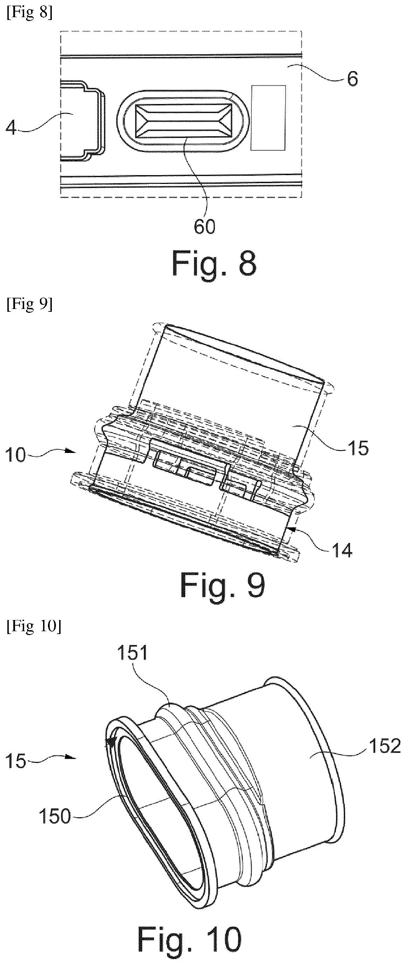

Le conduit 10 en tant que tel et ses deux pièces 14, 15 le constituant sont représentés en figures 9 à 11.

Le raidisseur 14 comprend dans sa partie supérieure deux ergots 140 diamétralement opposés dans une direction radiale du conduit et faisant saillie vers l'extérieur de ce dernier. Ces ergots 140 ont pour fonction de limiter la déformation (écrasement) de la partie souple 15 sous les diverses contraintes possibles liées à l'environnement, plus particulièrement au refroidissement liquide du pack-batterie, à l'intérieur du carter.

La pièce 15 formant la partie souple est un soufflet comprenant trois portions adjacentes 150, 151, 152.

La portion annulaire 150 formant la base du soufflet sert de plan de collage au couvercle 9 du boitier 6 ou au raidisseur 14. Le collage s'effectue par dépôt d'un cordon de colle sur le couvercle 9 et la portion annulaire 150 est appuyée contre ce cordon de colle.

La portion centrale 151 dans la prolongement de la base 150 comprend un pli calibré qui a pour fonction la compensation des jeux sur les 3 axes X, Y, Z.

La portion supérieure 152 dans le prolongement de la portion centrale 151 permet l'insertion et le blocage du soufflet 14 dans une ouverture débouchante 12 du carter 11.

Différents autres modes de réalisation du conduit de dégazage 10 par surmoulage peuvent être envisagés afin de simplifier le montage et l'intégration du conduit et également d'abaisser les coûts de production pour des volumes importants.

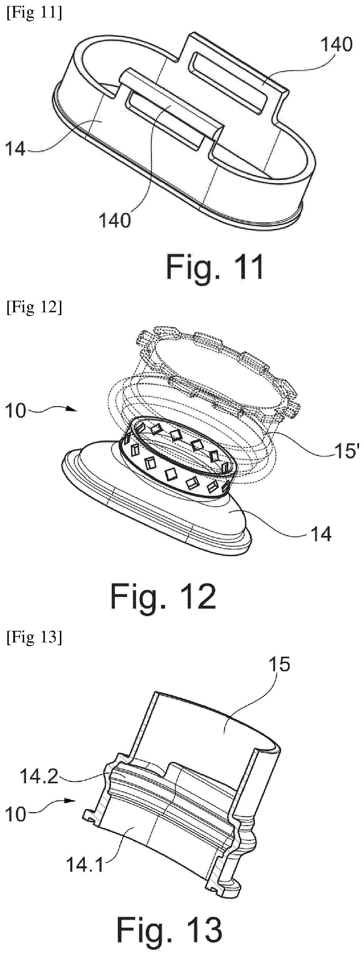

La figure 12 montre une partie souple 15' directement surmoulée sur le raidisseur 14. Sur cette figure 12, les trous visibles, réalisés sur la périphérie supérieure du raidisseur 14, servent d'empreinte pour l'accroche de la matière souple de la partie surmoulée 15'.

La figure 13 illustre un surmoulage de deux anneaux rigides 14.1, 14.2 formant le raidisseur 14 directement à l'intérieur du soufflet 15.

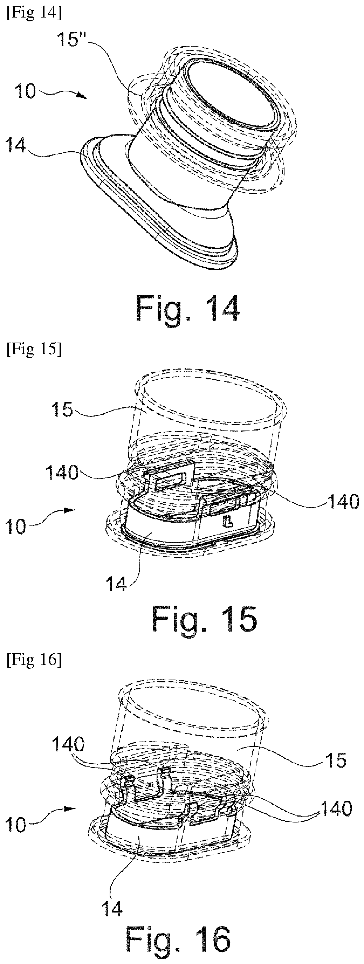

La figure 14 illustre un mode selon lequel le raidisseur 14 s'étend sur toute la hauteur, i.e. du couvercle 9 de boitier 6 jusqu'à la partie supérieure de l'ouverture débouchante, un anneau élastique 15" de type silentbloc formant la partie souple étant emmanché à force autour de la partie supérieure du raidisseur 14.

Dans le mode où le soufflet 15 entoure complètement le raidisseur 14, on peut prévoir deux ergots 140 rectilignes sous la forme de barrettes, diamétralement opposées (figure 15), ou des ergots ponctuels 140 en nombre supérieur (figure 16).

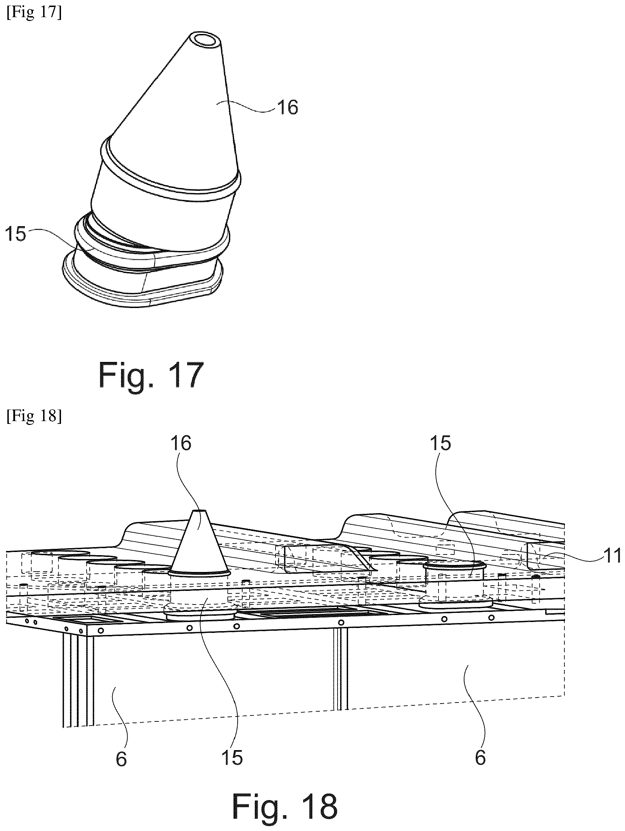

Comme montré en figures 17 et 18, afin de faciliter la mise en place des soufflets 15 lors de la fermeture du carter 11 du pack-batterie, il est possible de mettre en œuvre un embout conique prédécoupé 16 à l'extrémité supérieure de soufflet 15. Cet embout conique 16 permet le centrage et la mise en position du soufflet 15 au travers d'une ouverture débouchante 12 du carter 11.

Une fois la mise en position réalisée, l'embout conique 16 est découpé aisément, afin de laisser le conduit 10 déboucher sur l'extérieur du carter 11 et de permettre la fixation finale, notamment au moyen d'une bride de fixation 13 dans un procédé de bouchonnage.

A l'issue de ce procédé, le conduit 10 débouchant sur l'extérieur, l'évent de sécurité est au contact de l'atmosphère extérieure.

L'invention n'est pas limitée aux exemples qui viennent d'être décrits; on peut notamment combiner entre elles des caractéristiques des exemples illustrés au sein de variantes non illustrées.

D'autres variantes et améliorations peuvent être envisagées sans pour autant sortir du cadre de l'invention.

Si dans l'exemple illustré, l'évent de sécurité a une section elliptique, on peut envisager toute autre section d'évent et par conséquent de conduit, notamment une section cylindrique.

Également, si le conduit selon l'invention autour de l'évent de sécurité peut être constitué comme précédemment décrit de deux pièces différentes, il peut tout-à-fait être réalisé en une seule pièce, de préférence en un seul matériau, fixée directement de façon étanche au boitier.

Dans le cas d'une seule pièce, le choix du matériau et de son dimensionnement doit être fait pour garantir à la fois l'intégrité du conduit en tant que tel vis-à-vis du dégazage et du liquide de refroidissement et suffisamment de souplesse pour compenser les jeux. Typiquement, le matériau peut être une nuance de caoutchouc avec un épaississement local pour apporter localement plus de rigidité.

## Revendications

1. Batterie ou Accumulateur électrochimique métal-ion, comprenant :
- un boitier (6) d'axe longitudinal (X),
- une zone de rupture (60) d'une partie du boitier, formant un évent de sécurité pour le dégazage de l'accumulateur,
- au moins un conduit (10) comprenant au moins une partie rigide (14) formant un raidisseur, fixé ou formé intégralement avec la partie du boitier, autour de l'évent de sécurité, et une partie souple (15) agencée de manière étanche avec le boitier ou avec le raidisseur lui-même étanche par rapport au boitier, dans le prolongement du raidisseur et autour de celui-ci, la partie souple étant adaptée pour se déformer élastiquement selon trois axes orthogonaux (X, Y, Z), de sorte à compenser des jeux selon ces axes lorsqu'elle est insérée et maintenue de manière étanche dans une ouverture débouchante (12) d'un carter (11) de module ou pack-batterie.

2. Batterie ou Accumulateur électrochimique métal-ion selon la revendication 1, le raidisseur et la partie souple constituant une seule pièce monobloc.

3. Batterie ou Accumulateur électrochimique métal-ion selon la revendication 2, le raidisseur étant une pièce directement fixée sur la partie du boitier, la partie souple (15') étant surmoulée sur le raidisseur.

4. Batterie ou Accumulateur électrochimique métal-ion selon la revendication 2, la partie souple étant une pièce directement fixée sur la partie du boitier, le raidisseur comprenant au moins un anneau (14.1, 14.2) surmoulé à l'intérieur de la partie souple.

5. Batterie ou Accumulateur électrochimique métal-ion selon la revendication 1, le raidisseur étant une pièce (14) distincte d'une pièce (15) formant la partie souple.

6. Batterie ou Accumulateur électrochimique métal-ion selon la revendication 5, la pièce (14) formant le raidisseur étant directement fixée sur la partie du boitier, la pièce (15) formant la partie souple étant également directement fixée sur la partie du boitier.

7. Batterie ou Accumulateur électrochimique métal-ion selon la revendication 5, le raidisseur étant une pièce directement fixée sur la partie du boitier, la partie souple étant un anneau élastique (15") emmanché à force sur le raidisseur.

8. Batterie ou Accumulateur électrochimique métal-ion selon l'une des revendications 5 à 7, la portion supérieure du raidisseur comprenant au moins deux ergots (140) diamétralement opposés dans une direction radiale du conduit et faisant saillie vers l'extérieur de ce dernier.

9. Batterie ou Accumulateur électrochimique métal-ion selon l'une des revendications précédentes, la partie souple étant un soufflet (15) comprenant:
- une portion de fixation (150) formant une base,
- une portion centrale (151) dans le prolongement de la base, comprenant au moins un pli adapté pour se déformer élastiquement selon les trois axes orthogonaux (X, Y, Z),
- une portion de blocage (152) dans le prolongement de la portion centrale, la portion de blocage étant adaptée pour s'insérer et être maintenue dans l'ouverture débouchante (11).

10. Batterie ou Accumulateur électrochimique métal-ion selon l'une des revendications précédentes, le raidisseur étant en un plastique haute température, choisi parmi le polyétheréthercétone (PEEK) ou le polyétherimide (PEI), ou en aluminium, ou en céramique.

11. Batterie ou Accumulateur électrochimique métal-ion selon l'une des revendications précédentes, la partie souple étant en élastomère choisi parmi un caoutchouc, un nitrile ou un silicone.

12. Batterie ou Accumulateur électrochimique métal-ion selon l'une des revendications précédentes, la partie souple comprenant, à son extrémité libre, un embout conique prédécoupé, adapté pour réaliser le centrage et la mise en position de la partie souple dans l'ouverture débouchante.

13. Module ou pack-batterie, comprenant:
- une pluralité de batteries ou accumulateurs électrochimiques métal-ion selon l'une des revendications précédentes,
- un circuit de fluide caloporteur pour refroidir ou réchauffer les accumulateurs, comprenant un réservoir de fluide caloporteur dans lequel les accumulateurs sont immergés, le réservoir comprenant un carter percé d'une pluralité d'ouvertures débouchantes dans chacune desquelles la partie souple d'un conduit d'accumulateur est insérée et maintenue de manière étanche.

14. Module ou pack-batterie selon la revendication 13, comprenant, en tant qu'organe de maintien étanche de la partie souple du conduit de chaque accumulateur, une bride de fixation (13) emmanchée à force dans la partie souple insérée dans une ouverture débouchante.

15. Module ou pack-batterie selon la revendication 13 ou 14, configuré de sorte que chaque conduit d'accumulateur puisse évacuer les gaz susceptibles d'être libérés par son évent, dans un espace en dehors du carter du module ou pack-batterie, notamment à l'atmosphère.
